# EUROPEAN PATENT SPECIFICATION

(11) **EP 2 322 829 B1**
(45) Date of publication and mention of the grant of the patent: **31.10.2012**
(21) Application number: 09425463.8
(22) Date of filing: 13.11.2009
(51) Int. Cl.: F16K 31/60

(54) **Fluid conveying and/or delivering device with labeling module**
Flüssigkeitsförder- und/oder abgabevorrichtung mit Markierungsmodul
Dispositif de fourniture et/ou transport de fluide avec un module d'étiquetage

(43) Date of publication of application: 18.05.2011
(73) Proprietor: F.I.P. Formatura Iniezione Polimeri S.p.A, 16015 Casella (Genova) (IT)
(72) Inventor: Bisio, Andrea, 16015 Casella Genova (IT); Mazzacano, Corrado, 16015 Casella Genova (IT)
(74) Representative: Leihkauf, Steffen Falk

(56) References cited:
- FR-A3- 2 732 440
- GB-A- 752 968
- US-A- 3 430 377
- US-B1- 6 688 024
- US-B1- 7 333 277

## Description

The present invention generally relates to a fluid conveying and/or delivering device provided with an identification label and particularly to a hydraulic valve with a labeling module, for example in fluid conveying and delivering systems.

In order to optimize and economize the production of fluid conveying and delivering systems, for example hydraulic circuits, provided with tubing and valves of various nature, for example control valves, regulating valves, outlet valves, dampening valves, delivery valves or selector valves, the valves are usually produced in large series independently from the tubing and connected to the latter only upon assembling the hydraulic circuit.

In a fluid conveying system with a plurality of valves having various functions, circuits and subcircuits of tubing and various types of fluids (liquids, gases, cold, hot, corrosive, toxic, food, sterile etc.) it is desired to be capable of identifying the function of a valve, the type of fluid flowing through the valve, the origin thereof, the maintenance or replacement date, the next maintenance or replacement date and other useful information for the prompt understanding of the function and status of each single valve.

When fluid conveying systems are being sold and installed, it may be further desired to provide the valves being provided and used with an identification label of the company selling or installing the latter, for example carrying a trademark.

Known solutions for the labeling of valves of the above-mentioned type provide for example an irreversible identification labeling that is obtained during the moulding step. This type of labeling is expensive and not sufficiently versatile to suit the different types of information which one desires to show on a valve.

A further solution used for the labeling of valves involves the application of adhesive labels, either written by a pen or by means of a printer, on the outer surface of the valve body. While being more versatile and easily adaptable to the various identification requirements and arrangement of information, it nevertheless results to be little resistant to corrosive environments, can be easily manipulated and entails an undesired accumulation of old adhesive labels that are difficult to remove in case a same valve is frequently re-used in various installations and/or functions.

It is further known to hang an identification label either written by hand or by means of a printer on the exterior of a valve, for example by means of a wire. This solution has a high risk of detaching the label, an insufficient resistance to corrosive substances and environments, and is prone to the accumulation of dirt and dust.

### Prior art document US3430377A describes a handle member having the features of the preamble of claim 1.

Accordingly, the object of the present invention is to provide a fluid conveying and/or delivering device, for example a valve, having at least one labeling module, having such characteristics as to overcome the drawbacks cited with reference to prior art.

A further object of the present invention is to provide a fluid conveying and/or delivering device, for example a valve, with at least one labeling module, having such characteristics as to be easily adapted to various labeling requirements, changes in the intended use and function of the device, while being consistent with a mass production of the device.

Yet another object of the present invention is to provide a fluid conveying and/or delivering device, for example a valve, with at least one labeling module, having such characteristics as to resist to corrosive and aggressive substances and environments.

These and other objects are achieved by means of a fluid conveying and/or delivering device, for example a valve, comprising:

- a housing with one or more tubular connecting portions which are removably connectable to corresponding connecting portions of a fluid conveying and/or delivering system,

- a labeling module with a label seat to accommodate an identification label and a protection lid that can be removably connected to the device such as to close the label seat outwardly of the device, wherein the protection lid comprises a transparent window which allows viewing the identification label inside the label seat from the outside of the device.

Thereby, the identification label can be easily replaced, is well visible through the transparent window and is protected by the protection lid.

In accordance with an aspect of the present invention, the housing of the device, particularly of a valve, comprises a connecting portion and the protection lid is directly connectable to the housing connecting portion.

In accordance with a further aspect of the present invention, the device, particularly a valve, comprises a control handle and the protection lid can be connected to a suitable connecting portion of the control handle.

In accordance with a further aspect of the present invention, the label seat is made in the protection lid and can be accessed from an inner side which is intended to face the device connecting portion.

In accordance with a still further aspect of the present invention, the label seat comprises at least one positioning edge suitable to engage a corresponding positioning edge of the label, such as to prevent any malpositioning of the label relative to the label seat.

In accordance with a still further aspect of the present invention, the protection lid comprises one or more snap-connecting portions, for example resilient teeth, to snap-engaging the corresponding connecting portion of the device.

In accordance with a still further aspect of the present invention, the protection lid is made of transparent plastics.

In order to better understand the invention and appreciate the advantages thereof, several non-limiting exemplary embodiments thereof will be described below with reference to the annexed drawings, wherein:

Fig. 1 is a perspective and longitudinal sectional view of a valve with a labeling module according to an embodiment of the invention in the assembled configuration;

Fig. 2 shows the valve in Fig. 1 with the labeling module being disassembled;

Fig. 5 is a top view of a valve with a control handle and a labeling module according to an embodiment of the invention;

Fig. 6 is a partial sectional view (only of the labeling module) according to line VI-VI in Fig. 5;

Fig. 7 is a view of the labeling module in Fig. 6 in a disassembled configuration.

Fig. 8 is a perspective sectional view (only of the control handle) according to line VI-VI in Fig. 5.

Fig. 9 illustrates the control handle in Fig. 8 with the labeling module disassembled.

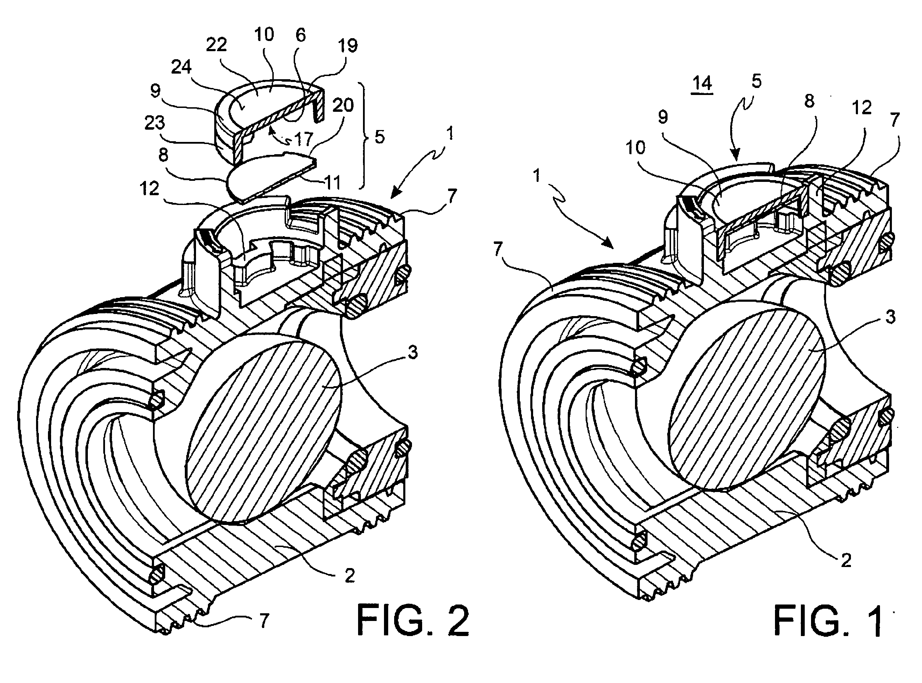

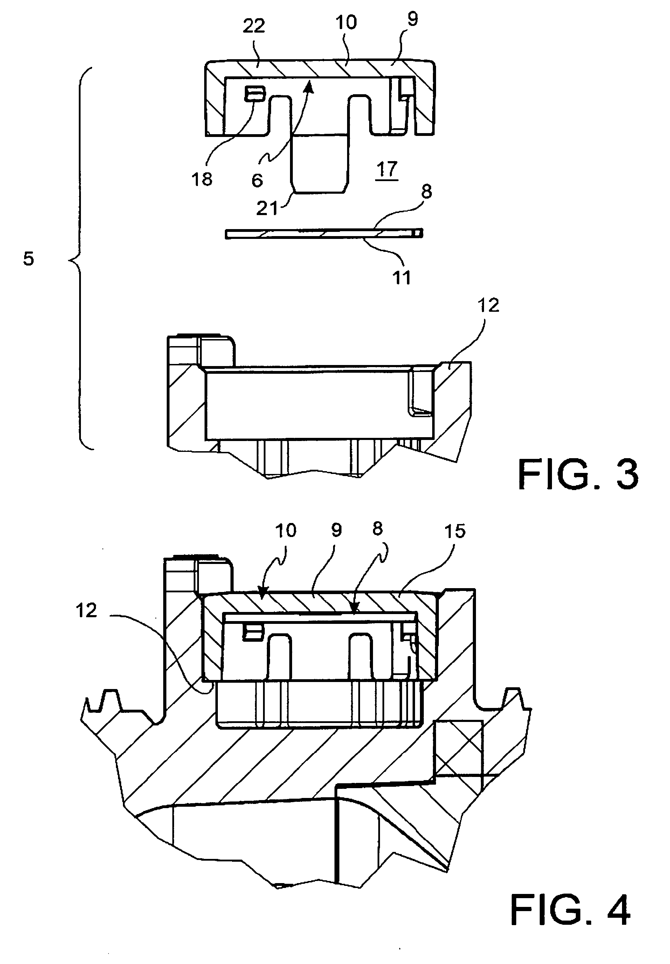

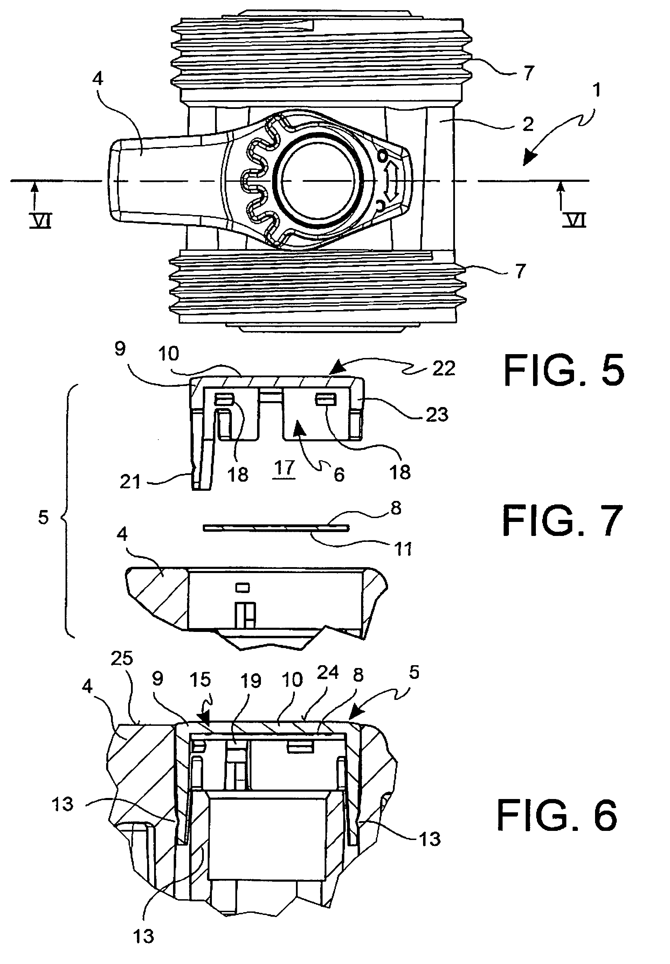

With reference to the figures, a fluid conveying and/or delivering device, for example a valve, is generally designated with reference 1. By way of non-limiting example, such a valve can comprise a valve body or housing 2, a shutter 3 arranged within the valve body 2 controlled by the fluid flow through the valve 1 (Fig. 1 and 2) or through a control handle 4 (Fig. 5) which is rotatably connectable to a support portion or "turret" of the housing 2 and suitable to position the shutter 3 through an actuating shaft arranged within a suitable housing passageway of the housing 2. The shutter 3, according to the operating position thereof, affects (for example adjusts, blocks, divides or delivers) a fluid flow, for example of a liquid flowing through the valve or more generally the device 1.

In accordance with a general embodiment of the invention, the device 1 comprises a housing 2 with one or more tubular connecting portions 7 that can be removably connected to corresponding connecting portions (not illustrated) of a fluid conveying and/or delivering system, for example a tubing system.

The device 1 further comprises a labeling module 5 with a label seat 6 to accommodate an identification label 8 and a protection lid 9 that can be removably connected to the device 1 such as to close the label seat 6 outwardly of the device 1. The protection lid 9 comprises a transparent window 10 allowing to view the identification label 8 inside the label seat 6 from the outside of the device 1 and protection lid 9.

A valve with a thus-configured labeling module 5 resolves a number of drawbacks of the prior art. Particularly, the identification label 8 can be easily replaced, is well visible through the transparent window and is protected by the protection lid 9.

The identification label 8 can be provided with indicia that can be written by hand, by means of a printer or by means of silkscreen-printing and can have a self-adhesive rear surface for fixing the label to a support plate 11.

In accordance with an embodiment (Fig. 1 and 2), the housing 2 of the device 1 forms a connecting portion 12 for a direct connection of the protection lid 9 to the housing 2, particularly to an upper or front side 14 thereof which is intended to be visible when the device 1 is in place.

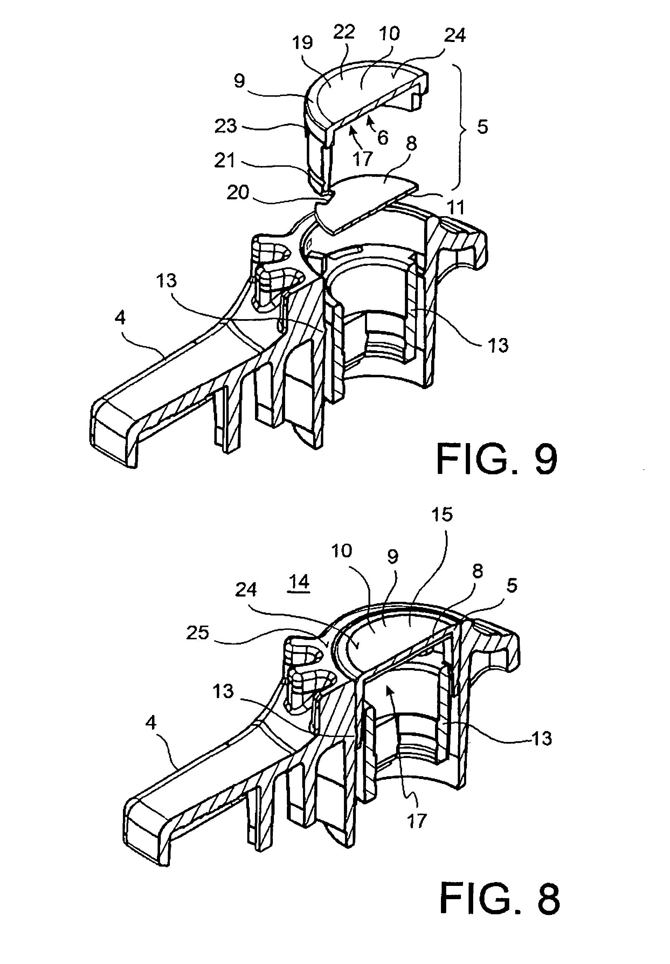

Alternatively, the protection lid can be connected to a suitable connecting portion 13 of the control handle 4 of device 1 (Fig. 5, 8 and 9).

In accordance with a further embodiment, the label seat 6 is formed in the protection lid 9 such that the identification label 8 (with or without the support plate 11) and the protection lid 9 provide a lid-label unit or lid-support-label unit 15 that can be connected to and removed from the device 1 as a pre-assembled unit.

This makes the labeling and re-labeling of the device 1 faster and easier.

Preferably, the label seat 6 made in the protection lid 9 can be accessed from an inner side 17 thereof which is intended to face the connecting portion 12, 13 of the device 1 and can comprise means to hold the identification label 8 and, when provided, the support plate 11, therein, for example one or more holding edges 18.

The label seat 6 can further comprise at least one positioning edge 19 suitable to engage a corresponding positioning portion 20 of the identification label 8 and/or support plate 11 thereof, such as to ensure a correct positioning of the identification label 8 relative to the label seat 6.

Advantageously, the protection lid 9 comprises one or more snap-connecting portions, for example resilient teeth 21, in order to snap-engaging the corresponding connecting portion 12, 13 of the device 1 or vice versa.

Alternatively, the protection lid 9 can be reversibly connectable to the device 1 by means of press-fit, screwing, magnetic attraction, shape-connection or bayonet connection, it may be lockable by means of a lock (not illustrated in the drawings) to prevent any unauthorized handling of the information carried on the identification label 8.

The protection lid 9 is preferably made of transparent plastic material and comprises a substantially planar base wall 22, preferably circular, which forms the transparent window 10, as well as a side wall 23 laterally defining the label seat 6 and forms the connecting portions 21 and the positioning edge 19.

Furthermore, the protection lid 9 and the corresponding connecting portion 12, 13 of valve 1 are preferably configured to insulate or separate the label seat 6 in a substantially air-tight manner from the external environment of the valve, such as to protect the identification label 8 from direct contact to corrosive or aggressive or liquid substances that can drip or be sprayed on the valve outer surface.

In order to avoid the deposit of dirt in the vicinity of the labeling module 5, the protection lid 9 advantageously has an outer surface 24 substantially flush with an adjacent outer surface 25 of the device 1, particularly of the housing 2 or control handle 4.

Obviously, to the device 1 according to the present invention, those skilled in the art, aiming at meeting contingent and specific requirements will be capable of make further modification and variations, which are all contemplated within the scope of protection of the invention, such as defined in the claims below.

## Claims

1. A valve (1), comprising:
- a housing (2) with one or more tubular connecting portions (7) which are removably connectable to corresponding connecting portions of a fluid conveying and/or delivering system,
- a labeling module (5) with a label seat (6) to accommodate an identification label (8) and a protection lid (9) which can be removably connected to the valve (1) such as to close the label seat (6) outwardly of the valve (1), wherein the protection lid (9) comprises a transparent window (10) which allows viewing the identification label (8) within the label seat (6) from the outside of the protection lid (9)-,
**characterized in that**:
- the label seat (6) is provided in the protection lid (9) such that the identification label (8) and the protection lid (9) provide a lid label unit (15) that can be connected to and removed from the valve (1) as a preassembled unit,
- said protection lid (9) comprises a substantially planar base wall (22) forming the transparent window (10), as well as a side wall (23) laterally defining the label seat (6),
wherein said label seat (6) can be accessed from an inner side (17) thereof which is intended to face a connecting portion (12, 13) of the valve (1).

2. The valve (1) according to claim 1, wherein said labeling module (5) includes said identification label (B) which is provided with indicia written by hand, by means of a printer or by means of silk-printing and having a self-adhesive rear surface adapted to attach the label [8) to a support plate (11).

3. The valve (1) according to claim 1 or 2, wherein said housing (2) provides a connecting portion (12) for a direct connection of the protection lid (9) to the housing (2).

4. The valve (1) according to claim 1 or 2, comprising a control handle (4) and said protection lid (9) is connectable to a connecting portion (13) of said control handle (4).

5. The valve (1) according to any preceding claim, wherein the label seat (6) comprises means for holding the identification label (8), and when provided, a support plate (11) therein.

6. The valve (1) according to any preceding claim, wherein said label seat (6) comprises at least one positioning edge (19) suitable to engage a corresponding positioning portion (20) of the identification label (8) or of a support plate thereof (11), such as to ensure the proper positioning of the identification label (8) relative to the label seat (6).

7. The valve (1) according to any preceding claim, wherein said protection lid (9) comprises one or more snap-connection portions (21) suitable to snap-engage a corresponding connecting portion (12, 13) of the valve (1) or vice versa.

8. The valve (1) according to any preceding claim, wherein said projection lid (9) is made of transparent plastics and said side wall (23) of the protection lid (9) forms said snap-connecting portions (21) and said positioning edge (19).

9. The valve (1) according to any preceding claim, wherein the protection lid (9) and the corresponding connecting portion (12, 13) of the valve (1) are configured to isolate the label seat (6) in a substantially airtight manner from the external environment.

10. The valve (1) according to any preceding claim, wherein the protection lid (9) comprises an outer surface (24) substantially flush with an adjacent outer surface (25) of the valve (1).

## Patentansprüche

1. Ventil (1), umfassend:
- ein Gehäuse (2) mit einem oder mehreren rohrförmigen Verbindungsabschnitten (7), die entfernbar mit entsprechenden Verbindungsabschnitten von einem Fluid-Förder- oder/und -Liefersystem verbindbar sind,
- ein Etikett-Modul (5) mit einem Etikett-Platz (6), um ein Identifizierungsetikett (8) aufzunehmen, und mit einem Schutzdeckel (9), der entfernbar mit dem Ventil (1) verbunden werden kann, um den Etikett-Platz (6) auswärts von dem Ventil (1) abzuschließen, wobei der Schutzdeckel (9) ein transparentes Fenster (10) umfasst, welches es ermöglicht, das Identifizierungsetikett (8) innerhalb des Etikett-Platzes (6) von der Außenseite des Schutzdeckels (9) her zu sehen,
**dadurch gekennzeichnet, dass**:
- der Etikett-Platz (6) in dem Schutzdeckel (9) so vorgesehen ist, dass das Identifizierungsetikett (8) und der Schutzdeckel (9) eine Deckel-Etikett-Einheit (15) bereitstellen, die als vormontierte Einheit mit dem Ventil (1) verbunden und von diesem entfernt werden kann,
- der Schutzdeckel (9) eine im Wesentlichen plane Basiswand (22) umfasst, welche das transparente Fenster (10) bildet, wie auch eine Seitenwand (23), welche den Etikett-Platz (6) seitlich definiert, wobei der Etikett-Platz (6) von einer Innenseite (17) davon zugänglich ist, die dazu bestimmt ist, einem Verbindungsabschnitt (12, 13) des Ventils (1) zugewandt zu sein.

2. Ventil (1) nach Anspruch 1, wobei das Etikett-Modul (5) das Identifizierungsetikett (8) umfasst, welches mit Markierungen versehen ist, die per Hand, vermittels einem Drucker oder vermittels Siebdruck geschrieben sind, und eine selbstklebende Rückseite aufweist, die dazu ausgebildet ist, das Etikett (8) an einer Trägerplatte (11) anzubringen.

3. Ventil (1) nach Anspruch 1 oder 2, wobei das Gehäuse (2) einen Verbindungsabschnitt (12) für eine direkte Verbindung des Schutzdeckels (9) mit dem Gehäuse (2) bereitstellt.

4. Ventil (1) nach Anspruch 1 oder 2, umfassend einen Steuergriff (4), und wobei der Schutzdeckel (9) mit einem Verbindungsabschnitt (13) von dem Steuergriff (4) verbindbar ist.

5. Ventil (1) nach einem vorhergehenden Anspruch, wobei der Etikett-Platz (6) Mittel umfasst, um das Identifizierungsetikett (8) und, wenn vorgesehen, eine Trägerplatte (11) darin zu halten.

6. Ventil (1) nach einem vorhergehenden Anspruch, wobei der Etikett-Platz (6) wenigstens einen Positionierungsrand (19) umfasst, der dazu geeignet ist, mit einem entsprechenden Positionierungsabschnitt (20) von dem Identifizierungsetikett (8) oder von einer Trägerplatte (11) davon in Eingriff zu treten, um die korrekte Positionierung des Identifizierungsetiketts (8) relativ zu dem Etikett-Platz (6) sicherzustellen.

7. Ventil (1) nach einem vorhergehenden Anspruch, wobei der Schutzdeckel (9) einen oder mehrere Schnappverbindungsabschnitte (21) umfasst, der/die dazu geeignet ist/sind, mit einem entsprechenden Verbindungsabschnitt (12, 13) von dem Ventil (1) in Schnapp-Eingriff zu treten, oder umgekehrt.

8. Ventil (1) nach einem vorhergehenden Anspruch, wobei der Schutzdeckel (9) aus transparentem Kunststoff hergestellt ist, und wobei die Seitenwand (23) von dem Schutzdeckel (9) die Schnappverbindungsabschnitte (21) und den Positionierungsrand (19) bildet.

9. Ventil (1) nach einem vorhergehenden Anspruch, wobei der Schutzdeckel (9) und der entsprechende Verbindungsabschnitt (12, 13) des Ventils (1) dazu konfiguriert sind, den Etikett-Platz (6) in einer im Wesentlichen luftdichten Weise von der äußeren Umgebung zu isolieren.

10. Ventil (1) nach einem vorhergehenden Anspruch, wobei der Schutzdeckel (9) eine Außenfläche (24) umfasst, die im Wesentlichen mit einer benachbarten Außenfläche (25) des Ventils (1) bündig ist.

## Revendications

1. Soupape (1) comprenant :
- un boîtier (2) avec une ou plusieurs parties de raccordement tubulaires (7) qui peuvent être raccordées de manière amovible à des parties de raccordement correspondantes d'un système de transport et/ou distribution de fluide,
- un module d'étiquetage (5) avec un siège d'étiquette (6) pour loger une étiquette d'identification (8) et un couvercle de protection (9) qui peut être raccordé de manière amovible à la soupape (1) afin de fermer le siège d'étiquette (6) vers l'extérieur de la soupape (1), dans laquelle le couvercle de protection (9) comprend une fenêtre transparente (10) qui permet l'observation de l'étiquette d'identification (8) à l'intérieur du siège d'étiquette (6) depuis l'extérieur du couvercle de protection (9), **caractérisée en ce que** :
- le siège d'étiquette (6) est prévu dans le couvercle de protection (9) de sorte que l'étiquette d'identification (8) et le couvercle de protection (9) fournissent une unité de couvercle-étiquette (15) qui peut être raccordée à et retirée de la soupape (1) sous la forme d'une unité pré-assemblée,
- ledit couvercle de protection (9) comprend une paroi de base sensiblement plane (22) formant la fenêtre transparente (10), ainsi qu'une paroi latérale (23) définissant latéralement le siège d'étiquette (6),
dans laquelle ledit siège d'étiquette (6) peut être atteint par son côté interne (17) qui est prévu pour faire face à la partie de raccordement (12, 13) de la soupape (1).

2. Soupape (1) selon la revendication 1, dans laquelle ledit module d'étiquetage (5) comprend ladite étiquette d'identification (8) qui est prévue avec des repères écrits à la main, au moyen d'une imprimante ou au moyen de l'impression sur soie et ayant une surface arrière auto-adhésive adaptée pour fixer l'étiquette (8) sur une plaque de support (11).

3. Soupape (1) selon la revendication 1 ou 2, dans laquelle ledit boîtier (2) fournit une partie de raccordement (12) pour un raccordement direct du couvercle de protection (9) au boîtier (2).

4. Soupape (1) selon la revendication 1 ou 2, comprenant une poignée de commande (4) et ledit couvercle de protection (9) peut être raccordé à une partie de raccordement (13) de ladite poignée de commande (4).

5. Soupape (1) selon l'une quelconque des revendications précédentes, dans laquelle le siège d'étiquette (6) comprend des moyens pour maintenir l'étiquette d'identification (8), et lorsqu'elle est fournie, une plaque de support (11) à l'intérieur de ce dernier.

6. Soupape (1) selon l'une quelconque des revendications précédentes, dans laquelle ledit siège d'étiquette (6) comprend au moins un bord de positionnement (19) approprié pour mettre en prise une partie de positionnement (20) correspondante de l'étiquette d'identification (8) ou de sa plaque de support (11) afin de garantir le bon positionnement de l'étiquette d'identification (8) par rapport au siège d'étiquette (6).

7. Soupape (1) selon l'une quelconque des revendications précédentes, dans laquelle ledit couvercle de protection (9) comprend une ou plusieurs parties de raccordement par encliquetage (21) appropriées pour mettre en prise par encliquetage une partie de raccordement (12, 13) correspondante de la soupape (1) ou vice versa.

8. Soupape (1) selon l'une quelconque des revendications précédentes, dans laquelle ledit couvercle de protection (9) est fabriqué à partir de plastique transparent et ladite paroi latérale (23) du couvercle de protection (9) forme lesdites parties de raccordement par encliquetage (21) et ledit bord de positionnement (19).

9. Soupape (1) selon l'une quelconque des revendications précédentes, dans laquelle le couvercle de protection (9) et la partie de raccordement (12, 13) correspondante de la soupape (1) sont configurés pour isoler le siège d'étiquette (6) d'une manière sensiblement étanche à l'air de l'environnement externe.

10. Soupape (1) selon l'une quelconque des revendications précédentes, dans laquelle le couvercle de protection (9) comprend une surface externe (24) sensiblement de niveau avec une surface externe (25) adjacente de la soupape (1).
